# EUROPÄISCHE PATENTANMELDUNG

(11) **EP 1 005 939 A2**
(43) Veröffentlichungstag der Anmeldung: **07.06.2000**
(21) Anmeldenummer: 99890329.8
(22) Anmeldetag: 20.10.1999
(51) Int. Cl.: B23G 1/32, B23G 1/34, B23G 1/36

(54) **Verfahren und Bearbeitungswerkzeug zum Herstellen schraubenförmig profilierter Werkstücke**

(30) Priorität: 30.11.1998 AT 201098
(71) Anmelder: WEINGARTNER MASCHINENBAU GESELLSCHAFT m.b.H., A-4656 Kirchham 26 (AT)
(72) Erfinder: Fuchs, Erwin, 4813 Altmünster (AT)
(74) Vertreter: Hübscher, Heiner, Dipl.-Ing.

(57) **Zusammenfassung**

Zum Herstellen schraubenförmig profilierter Werkstücke (1) wird zuerst das Schraubenprofil (2) durch eine Fräsbearbeitung vorgefertigt und dann durch eine Schleifbearbeitung der Profiloberfläche endgefertigt. Um in rationeller Weise beste Bearbeitungsqualitäten zu erreichen, wird die Schleifbearbeitung mit einem dem Fräswerkzeug (3, 9) für die Fräsbearbeitung in Form, Größe, Drehachslage und Schneidenanordnung angeglichenen Schleifwerkzeug (6, 12) durchgeführt.

## Beschreibung

Die Erfindung bezieht sich auf ein Verfahren zum Herstellen schraubenförmig profilierter Werkstücke, nach dem zuerst das Schraubenprofil durch eine Fräsbearbeitung vorgefertigt und dann durch eine Schleifbearbeitung der Profiloberfläche endgefertigt wird, sowie auf ein Bearbeitungswerkzeug zum Durchführen dieses Verfahrens.

Unter schraubenförmig profilierten Werkstücken werden im wesentlichen Getriebeschnecken, Gewindespindeln, Förderschnecken, Schnecken zur Kunststofferzeugung, Pumpen- und Kompressorrotoren u. dgl. verstanden, wobei das Schraubenprofil dieser Werkstücke mit großer Genauigkeit und einwandfreier Oberflächengüte hergestellt werden muß. Durch eine Fräsbearbeitung läßt sich das Schraubenprofil rationell vorfertigen, doch ergibt das Fräsen eine Profiloberfläche einer meist unzureichenden Güte, womit eine nachträgliche Schleifbearbeitung erforderlich ist.

Ein Schleifen ins volle Material, das sogenannte Tiefschleifen, könnte in verschiedenen Fällen eine Profilfertigung ohne zusätzliches Feinschleifen ermöglichen, welches Tiefschleifen allerdings recht zeitaufwendig und mit recht begrenzten Bearbeitungstiefen verbunden ist. Außerdem fällt schwierig zu entsorgender Schleifschlamm an und es kann auf Grund der hohen Wärmebelastung zu Härterissen kommen.

Zur Endfertigung der vorgefertigten Schraubenprofile wird häufig wegen der geringen Bearbeitungstiefe eine Schleifbearbeitung mittels Bandschleifens vorgenommen, wozu zwei unterschiedliche Bearbeitungsmaschinen, nämlich eine Fräsmaschine und eine Bandschleifmaschine, erforderlich sind. Wird allerdings das Schraubenprofil mit einer verschleißfesten Schicht versehen, die wegen ihrer Oberflächenrauhigkeit nachzuschleifen ist, muß dieses Nachschleifen mit einer Schleifscheibe erfolgen, da die verschleißfeste Schicht für ein Bandschleifen zu hart ist. Eine solche Schleifscheibe verzeiht aber keine vorschubbedingten Abweichungen gegenüber der gefrästen Oberfläche, was beim Nachschleifen zur Gefahr eines örtlichen Durchschleifens der Verschleißschicht führt.

Der Erfindung liegt daher die Aufgabe zugrunde, ein Verfahren der eingangs geschilderten Art anzugeben, das auf rationelle Weise eine Schraubenprofilfertigung mit einwandfreier Oberflächenqualität gewährleistet. Zudem soll ein zur Durchführung dieses Verfahrens bestens geeignetes Schleifwerkzeug geschaffen werden.

Die Erfindung löst diese Aufgabe dadurch, daß die Schleifbearbeitung mit einem dem Fräswerkzeug für die Fräsbearbeitung in Form, Größe, Drehachslage und Schneidenanordnung angeglichenen Schleifwerkzeug durchgeführt wird. Durch diese so einfache wie elegante Maßnahme können die Vorteile der Fräsbearbeitung, wie großer Spanabtrag und schneller Bearbeitungsablauf sowie das Fehlen eines problematischen Schleifschlammes, mit den Vorteilen des Schleifens mittels harter Schleifscheibe, wie das Erzielen einer sehr glatten Oberfläche bei konstanter Schleiftiefe, optimal kombiniert werden, wobei sich durch die Gleichartigkeit der Werkzeugausbildung für das Fräsbearbeiten einerseits und das Schleifbearbeiten anderseits gleiche Bearbeitungsbedingungen für das Fräsen und das Schleifen ergeben und sich der Schleifvorgang exakt an den vorangegangenen Fräsvorgang anpassen läßt, was zu besten Oberflächenqualitäten führt.

Um das Wirbelfräsen als die schnellste der spanenden Bearbeitungen für die Profilvorfertigung nutzen zu können, erfolgen die Profilfertigung durch ein Wirbelfräsen und die Profilendfertigung durch ein angeglichenes Wirbelschleifen, so daß die mit dem Schleifvorgang entstehende Oberfläche auch exakt an die mit dem Fräsvorgang entstandene Oberfläche angepaßt wird. Eine solche Oberflächenanpassung wäre durch den Einsatz eines üblichen Umfangsschleifens nicht zu erreichen, weil die durch das Wirbelfräsen erzielte Oberfläche in bestimmten Bereichen ganz speziellen Verschneidungsregeln folgt, die nur durch ein mit einwärts gerichteten Schneiden ausgestattetes Werkzeug nachzuvollziehen sind.

Da durch die Gleichartigkeit von Fräswerkzeug und Schleifwerkzeug die Voraussetzung gegeben ist, die Vorfertigung und Endfertigung des Schraubenprofils in miteinander ähnlicher Weise durchzuführen, können erfindungsgemäß die Fräs- und Schleifbearbeitung während einer gleichbleibenden Aufspannung des Werkstückes in einer Werkzeugmaschine vorgenommen werden, wobei es grundsätzlich möglich ist, die Fräs- und Schleifbearbeitung mit stirnseitig, außenumfangsseitig oder innenumfangsseitig schneidenbestückten Werkzeugen durchzuführen.

Bekannte Schleifwerkzeuge weisen einen um eine Werkzeugachse drehbaren Grundkörper auf, der umfangseitig einen ringförmigen Schleifkörper aufnimmt. Ist ein scheibenförmiger Grundkörper mit am Außenumfang angesetztem Schleifkörper vorgesehen, läßt sich ein an einen Umfangfräser angeglichenes Schleifwerkzeug zur Verfügung stellen. Ist der ringförmig ausgebildete Grundkörper am Innenumfang mit dem Schleifkörper bestückt, entsteht ein einem Wirbelwerkzeug vergleichbares Schleifwerkzeug, das zum Wirbelschleifen nach einem Wirbelfräsen eingesetzt werden kann. Dabei wird der Querschnitt des Schleifkörpers jeweils an die durch die Schneiden des Wirbelfräsers bestimmte Schneidkontur angepaßt sein, um aneinander angeglichene Bearbeitungsbedingungen sicherzustellen.

In der Zeichnung ist der Erfindungsgegenstand beispielsweise dargestellt, und zwar zeigen
- Fig. 1 und 2: die Durchführung des erfindungsgemäßen Herstellungsverfahrens in zwei Verfahrensschritten unter Einsatz eines Fräs- und eines Schleifwerkzeuges jeweils im Schaubild und die
- Fig. 3 und 4: die gleichen Verfahrensschritte unter Einsatz anderer Fräs- und Schleifwerkzeuge ebenfalls im Schaubild.

Um auf rationelle Weise ein zylindrisches oder konisches Werkstück 1 mit einer Schraubenprofilierung 2 herstellen zu können, wird zuerst das Schraubenprofil 2 durch eine Fräsbearbeitung vorgefertigt und dann durch eine Schleifbearbeitung der Profiloberfläche endgefertigt.

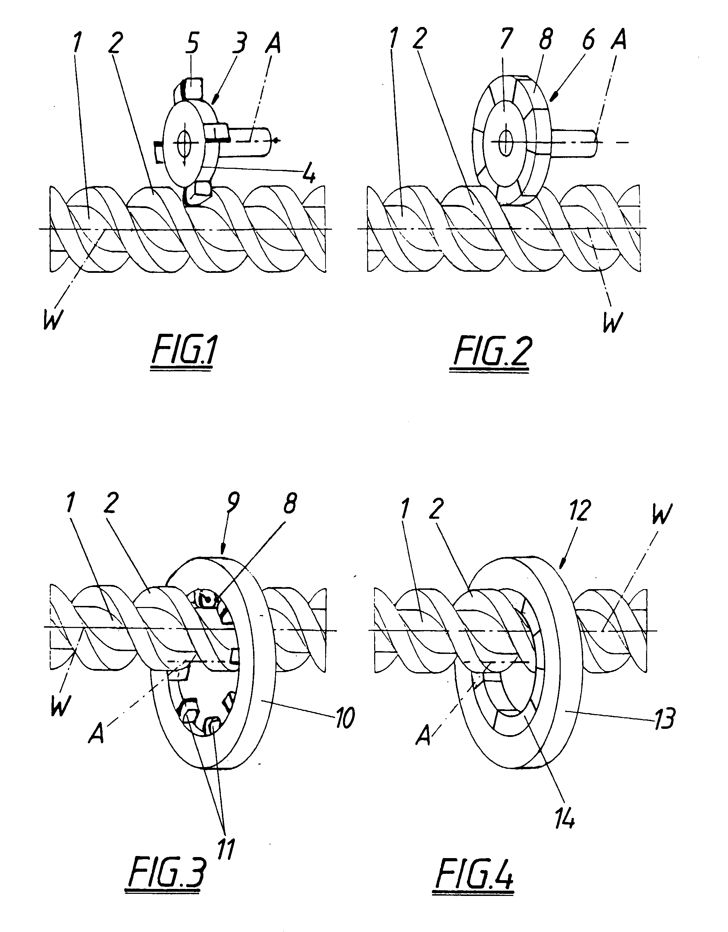

Wie in den Fig. 1 und 2 veranschaulicht, erfolgt die Fräsbearbeitung mittels eines Umfangsfräsers 3, der aus einem um die Achse A rotierenden scheibenförmigen Grundkörper 4 mit radial auswärts gerichteten Messern 5 besteht, wobei die Werkzeugachse A in einer Parallelebene zur Werkstückachse W liegt. ) Zum anschließenden Endfertigen wird ein Außenschleifwerkzeug 6 eingesetzt, das in Form, Größe, Drehachslage und Schneidenanordnung an den Umfangsfräser 3 angeglichen ist und dementsprechend einen um die Werkzeugachse A rotierenden scheibenförmigen Grundkörper 7 mit einem am Außenumfang sitzenden ringförmigen Schleifkörper 8 aufweist, wobei der Querschnitt des Schleifkörpers 8 der Schnittkontur der Messer 5 entspricht.

Wie in Fig. 3 und 4 angedeutet, kann zur Vorfertigung des Schraubenprofils 2 auch ein Wirbelfräser 9 Verwendung finden, der einen um die Werkzeugachse A rotierenden ringförmigen Grundkörper 10 mit radial einwärts gerichteten Messern 11 umfaßt. Das anschließende Endfertigen wird dann dementsprechend mit einem Wirbelschleifwerkzeug 12 vorgenommen, das aus einem um die Werkzeugachse A rotierenden ringförmigen Grundkörper 13 und einem am Innenumfang angeordneten Schleifkörper 14 besteht, wobei wiederum der Querschnitt des Schleifkörpers 14 der Schnittkontur der Messer 11 angepaßt ist.

Durch die aufeinander in Form, Größe, Drehachslage und Schneidenanordnung angeglichenen Fräs- und Schleifwerkzeuge können die Fräs- und Schleifbearbeitungen zur Herstellung des Schraubenprofils auf ein und derselben Werkzeugmaschine durchgeführt werden, wobei sich zwangsweise auch die Bearbeitungsbedingungen gleichen und sich dadurch beste Bearbeitungsqualitäten erreichen lassen.

## Patentansprüche

1. Verfahren zum Herstellen schraubenförmig profilierter Werkstücke (1), nach dem zuerst das Schraubenprofil (2) durch eine Fräsbearbeitung vorgefertigt und dann durch eine Schleifbearbeitung der Profiloberfläche endgefertigt wird, dadurch gekennzeichnet, daß die Schleifbearbeitung mit einem dem Fräswerkzeug (3, 9) für die Fräsbearbeitung in Form, Größe, Drehachslage und Schneidenanordnung angeglichenen Schleifwerkzeug (6, 12) durchgeführt wird.

2. Verfahren nach Anspruch 1, dadurch gekennzeichnet, daß die Profilvorfertigung durch ein Wirbelfräsen und die Profilendfertigung durch ein angeglichenes Wirbelschleifen erfolgen.

3. Verfahren nach Anspruch 1 oder 2, dadurch gekennzeichnet, daß die Fräs- und Schleifbearbeitung während einer gleichbleibenden Aufspannung des Werkstückes (1) in einer Werkzeugmaschine vorgenommen werden.

4. Schleifwerkzeug (6, 12) zum Durchführen des Verfahrens nach Anspruch 2 oder 3, mit einem um eine Werkzeugachse (A) drehbaren Grundkörper (7), der umfangseitig einen ringförmigen Schleifkörper (8) aufnimmt, dadurch gekennzeichnet, daß der ringförmig ausgebildete Grundkörper (13) am Innenumfang mit dem Schleifkörper (14) bestückt ist.
